# EUROPÄISCHE PATENTANMELDUNG

(11) **EP 4 609 977 A1**
(43) Veröffentlichungstag der Anmeldung: **03.09.2025**
(21) Anmeldenummer: 25160989.7
(22) Anmeldetag: 28.02.2025
(51) Int. Cl.: B23D 55/00, B23D 59/00

(54) **VORRICHTUNG ZUM MESSERSCHNEIDEN ODER SÄGEN VON WERKSTÜCKEN MIT EINER ÜBERWACHUNG DER BANDSCHÄDIGUNG, VERFAHREN ZUR ÜBERWACHUNG DES SCHÄDIGUNGSZUSTANDES EINES BANDMESSERS BZW. EINER BANDSÄGE**

(30) Priorität: 01.03.2024 DE 102024106030
(71) Anmelder: ALBRECHT BÄUMER GmbH & Co. KG, 57258 Freudenberg (DE)
(72) Erfinder: Brückner, Julian, 57234 Wilnsdorf (DE); Horsthemke, Jan, 57074 Siegen (DE); D´Costa, Inal Rocky, 40472 Düsseldorf (DE); Moisel, Christoph, 51069 Köln (DE); Sharma, Shubham, 57078 Siegen (DE); Kraemer, Peter, 97297 Waldbüttelhorn (DE); Nollen, Andreas, 57076 Siegen (DE); Bertelmann, Philipp, 59425 Unna (DE); Richter, Wolfgang, 5725 Netphen (DE)
(74) Vertreter: Patentanwälte Bauer Vorberg Kayser

(57) **Zusammenfassung**

Die Erfindung betrifft eine Vorrichtung zum Messerschneiden oder Sägen von Werkstücken, mit einem endlosen, umlaufenden Bandmesser (26) bzw. einer endlosen umlaufenden Bandsäge, wobei die Vorrichtung (10) mindestens einen Sensor (42a, 42b, 42c, 42d, 42e, 42f) aufweist, wobei der mindestens eine Sensor (42a, 42b, 42c, 42d, 42e, 42f) einen die Bandschädigung repräsentierenden Messwert erfasst und wobei der Sensor (42a, 42b, 42c, 42d, 42e, 42f) mit mindestens einer Auswerteeinheit (44) verbunden ist und der Auswerteinheit (44) der die Bandschädigung repräsentierende Messwert zugeführt wird und wobei mittels der Auswerteeinheit (44) basierend auf dem Messwert eine Information über den Schädigungszustand des Bandmessers (26) oder der Bandsäge generierbar ist.

## Beschreibung

Die Erfindung betrifft eine Vorrichtung zum Messerschneiden oder Sägen von Werkstücken gemäß Patentanspruch 1. Die Erfindung betrifft ferner ein Verfahren zur Überwachung des Zustandes eines endlosen umlaufenden Bandmessers oder bzw. einer endlosen umlaufenen Bandsäge gemäß Anspruch 6, ein Computerprogramm gemäß Patentanspruch 10 und ein Nachrüstungs-Kit gemäß Patentanspruch 11.

Messerschneiden und Sägen sind dabei gemäß DIN-Normen (z.B. DIN 8588 und DIN 8589-6) definierte Bearbeitungsmethoden von Werkstücken. Messerschneiden bezeichnet dabei das Zerteilen eines Werkstückes mittels mindestens eines Messers und Sägen die spanende Bearbeitung eines Werkstückes. Zum Messerschneiden werden insbesondere glatte und gezahnte Messer verwendet und zum Sägen Sägeblätter mit Zahnverschränkung.

Vorrichtung zum Messerschneiden (auch als Schneidemaschinen bezeichnet) oder Vorrichtung zum Sägen, insbesondere zum Schneiden oder Sägen von Schaumstoffen oder Kunststoffen, sind aus dem Stand der Technik hinlänglich bekannt. Insbesondere sind solche Vorrichtungen bekannt, welche ein endloses, umlaufendes Bandmesser bzw. eine endlose umlaufende Bandsäge aufweisen. Das Bandmesser bzw. die Bandsäge durchläuft dabei kontinuierlich einen Schneidbereich, in welchem ein Werkstück zugeführt und geschnitten wird. Das Bandmesser bzw. die Bandsäge ist dazu in der Regel über mehrere Umlenkrollen (auch als Laufräder oder für Schneidemaschinen als Messerräder bezeichnet) geführt und angetrieben und bildet eine geschlossene Form.

Solche umlaufenden, endlosen Bandmesser bzw. Bandsägen unterliegen dabei vielfältigen Belastungen:
Unter anderem unterliegen solche Bandmesser bzw. Bandsägen Zugbeanspruchungen, welche dadurch hervorgerufen werden, dass das Bandmesser bzw. die Bandsäge über eine Spanneinheit (z.B. ein Pneumatikzylinder) auf eine definierte Bandspannung gespannt wird, sowie im während des Schneidens bzw. Sägens des Werkstückes ausgelenkt wird.

Zudem unterliegen Bandmesser bzw. Bandsägen Biegebeanspruchungen. Wie vorstehend beschrieben, wird ein Bandmesser bzw. eine Bandsäge während des Betriebs über Umlenkrollen geführt und umgelenkt. Diese Umlenkung führt zu Biegebeanspruchungen, die durch den Durchmesser der Umlenkrollen definiert werden.

Zudem unterliegen vor allem Bandmesser in bestimmten Vorrichtungen zum Schneiden von Werkstücken besonderen Beanspruchungen. Für das Schneiden beliebiger 2D-Konturen wird das Bandmesser üblicherweise durch Verdreheinheiten tordiert. Die Verdrehung eines endlosen Bandmessers erfolgt in der Regel zwischen zwei auf beiden Seiten des Schneidbereiches befindlichen Lagerpunkten an den Umlenkrollen und dazu korrespondierenden Verdreheinheiten, wobei der Rest des Bandmessers nicht verdreht ist. Die Torsionsbeanspruchung steigt in Abhängigkeit des Verdrehwinkels an.

Die Lebensdauer solcher wie vorstehend beschriebenen endlosen, umlaufenden Bandmesser oder Bandsägen kann auf unter hundert Stunden bis mehrere hundert Stunden begrenzt sein. Insbesondere bei Konturschneidemaschinen mit Verdreheinheiten liegt die Lebensdauer bei nur etwa 40 Stunden und ist damit deutlich geringer als bei Bandmessern, die keine Tordierungen erfahren. Am Ende der Lebensdauer reißen die Bandmesser bzw. Bandsägen üblicherweise. Typischerweise reißt das Bandmesser bzw. die Bandsäge während eines laufenden Vorgangs, in welchem sich das Bandmesser oder die Bandsäge innerhalb des Werkstückes befindet. Dies führt in der Regel dazu, dass das zu bearbeitende Werkstück ganz oder teilweise zerstört wird. Wirtschaftliche Nachteile entstehen besonders dann, wenn teure Werkstücke zerstört werden oder bei einem automatisierten, z.B. über Nacht laufenden, Prozess dieser frühzeitig aufgrund eines Risses des Bandmessers bzw. Bandsäge abgebrochen wird und der Rest der Produktionszeit ungenutzt verstreicht, oder wenn die Vorrichtung Teil einer Produktionslinie ist und mit dem Stillstand die ganze Linie steht.

Die zugrundeliegende Aufgabe der Erfindung ist es daher, eine Vorrichtung zum Messerschneiden oder Sägen und ein Verfahren zur Verfügung zu stellen, mittels welchen die Benutzung der Vorrichtung verbessert werden kann, eine planbare Instandhaltung vor einem plötzlich eintretenden Messeriss möglich ist, der Materialausschuss von Werkstückmaterial reduziert wird als auch die allgemeine Sicherheit erhöht wird. Ferner sollen ein Computerprogramm und ein Nachrüstungs-Kit zur Verfügung gestellt werden, mittels welchem ein Verfahren und eine existierende Vorrichtung mit den vorstehenden Vorteilen ermöglicht werden soll.

Die Lösung der Aufgabe erfolgt erfindungsgemäß mit den Merkmalen der unabhängigen Ansprüche. Weitere praktische Vorteile und Ausführungsformen sind in Verbindung mit den abhängigen Ansprüchen beschrieben.

Die Erfindung betrifft eine Vorrichtung zum Messerschneiden oder Sägen von Werkstücken. Insbesondere handelt es sich bei dem Werkstück um ein Werkstück aus Schaumstoff oder Kunststoff. Die Vorrichtung weist dabei ein endloses, umlaufendes Bandmesser oder eine endlose umlaufende Bandsäge auf. Endlos bedeutet in diesem Fall, dass das Bandmesser bzw. die Bandsäge als ein geschlossenes Band vorliegt, ohne definierten Anfang und definiertes Ende. Das Bandmesser bzw. die Bandsäge läuft in einer Richtung (im Uhrzeigersinn oder gegen den Uhrzeigersinn) im Kreis um.

Insbesondere weist die Vorrichtung mehrere Umlenkrollen auf, insbesondere mindestens zwei, bevorzugt vier oder mehr z.B. mindestens fünf oder sechs Umlenkrollen. Die Umlenkrollen sind beabstandet zueinander angeordnet und dienen zur Führung und Lagerung des Bandmessers bzw. der Bandsäge. Bei vier Umlenkrollen wird insbesondere von dem Bandmesser bzw. der Bandsäge eine viereckige, (z.B. rechteckförmige oder trapezförmige) Ebene aufgespannt. Zudem kann vorgesehen sein, dass die Umlenkrollen nicht alle in einer Ebene liegen. Insbesondere handelt es sich bei mindestens einer Umlenkrolle um eine Antriebsrolle. Insbesondere sind die Umlenkrollen so angeordnet, dass jeweils eine Umlenkrolle seitlich eines Schneidbereiches angeordnet ist. Dies kann bei einer horizontalen Vorrichtung links und rechts neben dem Schneidbereich sein und bei einer vertikalen Vorrichtung oberhalb und unterhalb des Schneidbereiches. Der Schneidbereich ist dabei der Bereich, in welchem sich das Werkstück befindet und mit einem Schneidabschnitt des Bandmessers bzw. der Bandsäge in Kontakt kommt.

Insbesondere handelt es sich bei mindestens einer Umlenkrolle um eine Spannrolle. Diese ist beweglich bzw. verschiebbar angeordnet, um eine definierte Bandspannung auf das Bandmesser bzw. die Bandsäge auszuüben. Insbesondere wird die Verlagerung der Spannrolle durch einen Aktor, wie einen Pneumatikzylinder, einen Hydraulikzylinder, eine Spiralfeder, ein Tellerfederpaket eine Spindel und/oder einen elektromechanischen Aktor realisiert.

Das Bandmesser läuft insbesondere mit einer Geschwindigkeit von 3 - 30 m/s (für den Fall des Messerschneidens) bzw. die Bandsäge läuft mit einer Geschwindigkeit von 50 - 100 m/s (im Falle des Sägens) um.

Das Bandmesser kann gezahnt (mit oder ohne Wellenschliff) oder ungezahnt sein.

Die Vorrichtung ist insbesondere geeignet zum Schneiden oder Sägen von Schaumstoffen oder Kunststoffen und insbesondere zum Schneiden oder Sägen von
- Polymer-Schaumstoffen (wie PU, PE, EVA, PVC, PS, PP, PE),
- aufgeschäumten und/oder porigen Materialien wie Schaumglas oder Strukturwerkstoffen (Wabengitter),
- Gummi oder Gummiverbund,
- Faser- und weiteren Verbundmaterialien (z.B. Kork),
- Verbundschaum oder recyceltem, geschreddertem und dann neu verklebtem Schaum,
- elastischen, weichen Vollmaterialien aus PU.
- spröd-harten Materialien, wie z.B. Dämmmaterialien aus Schaumstoff, Gummi oder Kunststoff.

Das Werkstück weist insbesondere eine Zugfestigkeit bis ungefähr 30 MPa und eine Dichte bis 1400 kg/m³ auf.

Bei der Vorrichtung handelt es sich insbesondere um eine Konturschneidemaschine mit einem Bandmesser. Das Bandmesser ist insbesondere abschnittsweise, insbesondere in dem Schneidabschnitt, um seine Längsachse verdrehbar. Insbesondere ist das Bandmesser in dem Schneidabschnitt gegenüber dem restlichen Abschnitt des Bandmessers um mindestens ±270° und bevorzugt um mindestens ±360° verdrehbar. Das Bandmesser unterliegt dann einer Torsion. Die Verdrehung wird insbesondere durch Verdreheinheiten realisiert. Jeweils eine Verdreheinheit befindet sich links und rechts seitlich des Schneidbereichs bzw. oberhalb und unterhalb des Schneidbereiches. Die Verdreheinheiten verdrehen das Bandmesser in dem Bereich zwischen den beiden den Schneidbereich seitlich aufspannenden Umlenkrollen und den Verdreheinheiten. Das Bandmesser ist im Bereich zwischen den Verdreheinheiten und benachbarten Spannrollen tordiert. Das Bandmesser ist im Schneidbereich und gegenüber den Auflagepunkten an den Umlenkrollen verdreht. Zusätzlich kann noch in Längsrichtung des Bandmessers betrachtet mindestens eine Mittenhalterung für das Bandmesser angeordnet sein, welche das Bandmesser im Schneidbereich zusätzlich führt und welche auch eine Verdreheinheit aufweisen kann. Der Mittenhalters ist insbesondere mittig des Schneidbereiches platziert.

Die Vorrichtung kann sowohl zum vertikalen als auch zum horizontalen Schneiden oder Sägen ausgelegt sein. Das heißt, die Relativbewegung zwischen dem Bandmesser bzw. der Bandsäge, zusätzlich zur Umlaufrichtung, und dem Werkstück erfolgt in vertikaler oder in horizontaler Richtung. Beim vertikalen Schneiden oder Sägen wird insbesondere das Bandmesser bzw. die Bandsäge von oben nach unten entlang einer Vertikalrichtung (z-Richtung) durch das Werkstück geführt, um vertikale 2D-Konturen in einer horizontalen Ebene (x-y-Ebene) Ebene zu schneiden. Bei einer horizontalen Vorrichtung durchläuft das Bandmesser bzw. die Bandsäge das Werkstück in einer Querrichtung (x-Richtung), um horizontale 2D-Konturen in einer vertikalen Ebene (y-z-Ebene) zu schneiden. Der Vorschub des Werkstückes beträgt insbesondere 1 - 100 m/min.

Erfindungsgemäß weist die Vorrichtung mindestens einen Sensor auf, welcher einen die Bandschädigung repräsentierenden Messwert erfasst. Als Sensor sollen hier sowohl separate, an der Vorrichtung angeordnete Sensoren aufgefasst werden, als auch bereits in die Vorrichtung integrierte Sensoren und/oder Sensoren, die Teil der Maschinensteuerung sind. Letztere Sensoren dienen insbesondere auch zur Auslesung anderer Parameter, welche für die Maschinensteuerung relevant sind.

Der mindestens eine Sensor ist mit einer Auswerteinheit verbunden und der Auswerteeinheit wird der die Bandschädigung repräsentierende Messwert zugeführt. Die Auswerteinheit ist dabei insbesondere Teil der Vorrichtung oder des Sensors, kann aber örtlich separiert von der Vorrichtung oder dem Sensor angeordnet sein. Insbesondere kann es sich bei der Auswerteeinheit um einen Server oder Mikrocontroller oder ein *Field Programmable Gate Array* (FPGA) handeln, welcher mit dem Sensor drahtgebunden oder drahtlos verbunden ist. Mittels der Auswerteeinheit ist, basierend auf dem Messwert, eine Information über den Schädigungszustand des Bandmessers bzw. der Bandsäge generierbar. Wie nachfolgend noch detailliert ausgeführt, kann eine solche Information eine prognostizierte Restlebensdauer des Bandmessers bzw. der Bandsäge sein. Alternativ oder ergänzend kann es sich bei der Information um eine Empfehlung hinsichtlich einer Optimierung des Schneide- bzw. Sägeprozesses handeln und/oder um eine Warnung, dass die aktuellen Schneide- bzw. Sägebedingungen oder Schneide- bzw. Sägeparameter das Bandmesser bzw. die Bandsäge stark belasten.

Wie vorstehend beschrieben, kann es bei solchen endlosen umlaufenden Bandmessern bzw. Bandsägen, insbesondere aufgrund von Reibung oder Torsion zum Reißen kommen, insbesondere auch wie vorab beschrieben zu Zeitpunkten, an welchen die Produktion erheblich beeinträchtigt wird. Durch die Überwachung des Zustands des Bandmessers bzw. der Bandsäge über einen die Bandschädigung repräsentierenden Messwert und die sich daraus ergebende Möglichkeit über den Zustand des Bandmessers eine Aussage zu treffen, wird eine quantitative Möglichkeit zur Verfügung gestellt, die es ermöglicht, dass rechtzeitig vor dem Reißen des Bandmessers bzw. der Bandsäge entsprechende Maßnahmen getroffen werden können. So kann das Bandmesser bzw. die Bandsäge z.B. ausgetauscht werden, bevor ein neues Werkstück verarbeitet wird, oder es können die Parameter eines Schneidprogramms oder Sägeprogramms entsprechend angepasst werden, insbesondere so, dass die Bearbeitung des aktuell im Prozess befindlichen Werkstücks noch ohne den Riss abschlossen werden kann. Die Lebensdauer des Bandmessers bzw. der Bandsäge kann optimal ausgenutzt werden, ohne dass das Bandmesser bzw. die Bandsäge unnötigerweise viel zu früh ausgetauscht wird. Die Prozess-Sicherheit wird erhöht, da das Bandmesser bzw. die Bandsäge nicht unvorhergesehen im Schnitt reißt und z.B. kein Entfernen von scharfen Bruchstücken aus der Vorrichtung notwendig wird.

In einer praktischen Ausführungsform misst der mindestens eine Sensor direkt oder indirekt einen Verfahrweg mindestens einer Spannrolle. Die Spannrolle dient zum Spannen des Bandmessers bzw. der Bandsäge auf eine definierte Bandspannung. Bei der Spannrolle handelt es sich insbesondere um eine Umlenkrolle zum Führen und Lagern des Bandmessers bzw. der Bandsäge.

Der mindestens eine Sensor kann insbesondere direkt oder indirekt eine wirkende Kraft einer Spannrolle messen. Eine indirekte Messung kann zum Beispiel über den Luftdruck eines Pneumatikzylinder erfolgen oder die Kraft kann mittels eines an der Spannrolle montierten Dehnungsmessstreifen ermittelt werden.

Insbesondere handelt es sich bei dem vorstehenden beschriebenen Sensor zur Messung des Verfahrwegs der Spannrolle um ein Distanzmesser, insbesondere ein Laser-Distanzmesser, einen Seilzugsensor oder einen linear-potentiometrischer- oder Magnetband- oder magnetostriktiver- oder inkremental-optischer-("Glasmaßstab") -Wegsensor.

In einer weiteren praktischen Ausführungsform kann es sich bei dem mindestens einen Sensor um einen Temperatursensor zur mittelbaren oder unmittelbaren Erfassung der Temperatur des Bandmessers bzw. der Bandsäge handeln. Die Temperatur wird insbesondere berührungslos erfasst. Der Temperatursensor ist insbesondere derart angeordnet, dass er die Temperatur des Bandmessers bzw. der Bandsäge selbst erfasst. Vorteilhafterweise handelt es sich um ein Pyrometer, insbesondere um ein Laserpyrometer. Alternativ oder ergänzend kann die Temperatur des Bandmessers bzw. der Bandsäge indirekt erfasst werden, indem die Temperatur in der Umgebung des Bandmessers bzw. der Bandsäge gemessen wird. Als Temperatursensor kann insbesondere ein PT100-Sensor oder Thermoelement zur Messung der Umgebungstemperatur vorgesehen sein. Insbesondere sind ein erster Temperatursensor zur Messung der Temperatur des Bandmessers bzw. der Bandsäge und ein zweiter Temperatursensor zur Messung der Umgebungstemperatur vorgesehen sein, wobei als Messwert insbesondere die Differenz aus der Temperatur des Bandmessers bzw. der Bandsäge und der Umgebung dient.

Herausfordernd bei der Erfassung von Messwerten, welche die Bandschädigung repräsentieren, ist, dass sich das Bandmesser bzw. die Bandsäge ständig bewegt, nämlich sowohl in Umlaufrichtung umläuft als ggf. auch verdreht wird. Zudem befindet sich das Bandmesser bzw. die Bandsäge mit dem belasteten Schneidabschnitt zumeist innerhalb des Werkstückes. Eine Messung an einer separaten Komponente und nicht direkt am Bandmesser bzw. der Bandsäge ist daher vorteilhaft.

Ergänzend oder alternativ handelt es sich bei dem mindestens einen Sensor um einen Beschleunigungssensor, zur Messung von durch das Bandmesser bzw. der Bandsäge verursachten Vibrationen. Der mindestens eine Beschleunigungssensor ist insbesondere an einem Element angeordnet, welches in engem Kontakt mit dem Bandmesser bzw. der Bandsäge steht. Insbesondere kann ein Beschleunigungssensor an einer Halterung einer Umlenkrolle, bzw. an einer Halterung der Spannrolle (=Spannschlitten) und/oder an dem Mittenhalter und/oder einer Verdreheinheit angeordnet sein. Insbesondere wird als Beschleunigungssensor ein triaxiale Beschleunigungssensor eingesetzt. Unter anderem die Frequenz und Amplitude der Vibrationen bzw. Beschleunigungen stellt dabei ein die Bandschädigung repräsentierender Messwert dar.

In weiteren praktischen Ausführungsformen kann als ein die Bandschädigung repräsentierender Messwerte die Bandgeschwindigkeit erfasst werden, z.B. über die Umlaufgeschwindigkeit der Umlenkrollen, welche z.B. aus der Steuerung der Vorrichtung entnehmbar ist. Als Sensor kann dazu zum Beispiel ein LSV (Laser Surface Velocitymeter), ein Inkrementaldrehgeber oder Drehzahlsensor (z.B. basierend auf dem Hall-Effekt oder einem optischen, induktiven, elektromagnetischen oder Wirbelstrom-Messprinzip) dienen.

Weiterhin kann als ein die Bandschädigung repräsentierender Messwert der Torsionswinkel erfasst werden, z.B. über die Verkippung der Verdreheinheiten, wobei dieser z.B. über einen Inkrementaldrehgeber oder Drehwinkelsensor (z.B. basierend auf dem Hall-Effekt oder einem optischen, induktiven, elektromagnetischen oder Wirbelstrom-Messprinzip) wird.

Es sind auch akustische Emissionssensoren denkbar, mittels welchen Schallwellen detektierbar sind. Solche Schallwellen können z.B. durch die Wechselwirkung zwischen dem Bandmesser bzw. der Bandsäge und weiteren Komponenten der Vorrichtung hervorgerufen werden oder durch Materialveränderungen im Bandmesser bzw. in der Bandsäge selbst.

Es können zusätzlich oder ergänzend als Sensoren elektrische oder faseroptische Dehnungsmessstreifen oder piezoelektrische bzw. piezoresistive Sensoren zur Messung der Wechselwirkung zwischen Bauteilen der Maschine, z.B. der Spannrolle, und dem Bandmesser bzw. der Bandsäge dienen. Diese werden an Stellen innerhalb der Vorrichtung angeordnet, wo Belastungen/Dehnungen/Verformungen und/oder Schwingungen auftreten, die mit dem Zustand des Bandmessers bzw. der Bandsäge korrelieren, z.B. am Krafteinleitungspunkt zwischen einer Spannrolle und eines Aktors oder an einer Achse bzw. Achsaufhängung mindestens einer Umlenk- und/oder Antriebsolle oder am Arm mindestens eines Mittenhalters.

Es können auch bereits für die Maschinensteuerung vorgesehene Sensoren verendet werden, welche z.B. den Motorstrom oder das Drehmoment der Antriebsrolle, den Motorstrom oder das Drehmoment mindestens eines Antriebs einer Verdreheinheit, den Motorstrom oder das Drehmoment mindestens eines Antriebs eines Tisches zur Ablage des Werkstücks, den Luftdruck eines Pneumatikzylinders bzw. den Motorstrom eines elektrischen Linearzylinders an einer Spannrolle messen.

Weiterhin kann es sich bei dem mindestens einen Sensor um eine digitale Kamera mit einer nachgeschalteten automatisierten Bildverarbeitung zur Detektion von Rissen und/oder sonstigen geometrischen und/oder optischen Veränderungen des Bandmessers bzw. der Bandsäge handeln.

Weiterhin kann es sich bei dem mindestens einen Sensor um einen Wirbelstromsensor zur Detektion von Rissen und/oder geometrischen Veränderungen des Bandmessers bzw. der Bandsäge handeln.

Weiterhin kann es sich bei dem mindestens einen Sensor um einen Wirbelstromsensor oder einen Ultraschallsensor zur Messung von Schwingungen des Bandmessers bzw. der Bandsäge handeln.

Neben den Sensoren ist die Auswerteeinheit insbesondere noch mit einer Eingabevorrichtung verbunden, insbesondere zur Eingabe von weiteren Parametern hinsichtlich des zu schneidenden Werkstoffes (wie etwa Dichte), des Materials des Bandmessers bzw. der Bandsäge, dem zuletzt durchgeführten Wechsel des Bandmessers bzw. der Bandsäge, eines Risses, des Durchmesser der Umlenkrollen und/oder der weitere Charakteristika des Bandmessers bzw. der Bandsäge.

Insbesondere kann nur einer der vorstehenden beschriebenen Sensoren vorgesehen sein. Alternativ sind mehrere Sensoren gleicher oder unterschiedlicher Art vorgesehen, mittels welchen unterschiedliche, die Bandschädigung repräsentierende Messwerte ermittelt werden und für die Prognose herangezogen werden.

Insbesondere werden mittels des einen oder der mehreren Sensoren permanent Messwerte ermittelt, um jeweils aktuell eine Information über den Schädigungszustand des Bandmessers (z.B. eine aktuelle Prognose der Lebensdauer des Bandmessers) zu erstellen.

In einer weiteren praktischen Ausführungsform weist die Vorrichtung eine Ausgabeeinheit auf, welche die generierte Information ausgibt. Zum Beispiel kann die Ausgabeeinheit eine Restlebensdauer ausgeben, eine Empfehlung hinsichtlich einer Optimierung des Schneide- bzw. Sägeprozesses und/oder eine Warnung. Bei der Ausgabeeinheit kann es sich insbesondere um einen Display handeln, mittels welchem z.B. die Restlebensdauer als Zahl in Stunden oder Minuten oder Sekunden anzeigbar ist. Die Ausgabeeinheit kann auch auf einem separaten Gerät vorhanden sein, und die Information wird hierin übertragen.

Es kann sich bei der Ausgabeeinheit auch um eine Signaleinrichtung handeln, welche insbesondere mindestens ein einzelnes Leuchtmittel aufweist, und verschiedene Farben anzeigen kann. Mittels einer Farbcodierung kann die Restlebensdauer des Bandmessers bzw. der Bandsäge visualisiert werden. So kann die Signaleinrichtung grün leuchten, wenn die Lebensdauer noch mehr als eine vorher definierte Stundenzahl entspricht und rot, wenn die Lebensdauer unter eine festgelegte Mindest-Lebensdauer bzw. die Laufzeit eines Schneide- bzw. Sägeprogramms fällt. Es kann auch mittels Farbcode der Betriebszustand der Vorrichtung ausgegeben werden. Als Beispiel kann die Signaleinrichtung grün leuchten, wenn keine Warnung vorliegt, orange, wenn eine Warnung generiert wurde und rot, wenn die Vorrichtung stillsteht.

Es kann sich bei der Ausgabeeinheit auch um eine Signaleinrichtung handeln, welche insbesondere mindestens ein akustisches Element, z.B. einen Lautsprecher oder eine elektromagnetische Fanfare, aufweist, und einen Ton oder unterschiedliche Töne erzeige kann. Es kann mittels eines Signaltons oder unterschiedlicher Signaltöne auf einen kritischen Betriebszustand der Vorrichtung hingewiesen werden.

Die Erfindung betrifft auch ein Verfahren zur Überwachung des Schädigungszustandes eines endlosen eines endlosen umlaufenden Bandmessers bzw. einer endlosen umlaufenden Bandsäge, wobei mindestens ein die Bandschädigung repräsentierender Messwert erfasst wird und anhand des mindestens einen Messwertes eine Information über den Schädigungszustand des Bandmessers bzw. der Bandsäge generiert wird. Mit dem Bandmesser bzw. der Bandsäge werden insbesondere Werkstücke aus Schaumstoff oder Kunststoff bearbeitet.

Die Überwachung erfolgt insbesondere in einem gesonderten Testdurchlauf vor- und/oder während und/oder nach einem Schneidbetrieb. Der Testdurchlauf kann insbesondere unter bestimmten, einstellbaren und reproduzierbaren Bedingungen bzw. Maschinenparametern, z.B. auch mit reduzierter Bandgeschwindigkeit oder statisch, erfolgen. Diese Parameter können auch eine gezielte Belastung, z.B. Torsion und/oder Bandspannung, hervorrufen. Ein Testdurchlauf kann insbesondere auch dafür genutzt werden, um spezielle physikalische Effekte (z.B. eine gezielte Schwingungs- oder Ultraschall-Anregung) auf das Bandmesser bzw. die Bandsäge einwirken zu lassen

Die Überwachung erfolgt bevorzugt im laufenden Produktionsbetrieb der Vorrichtung. Ein möglicher gesonderte Testlauf kann aber auch nach einem Schneid- bzw. Sägeprozess zur Validierung der Prognose aus dem laufenden Produktionsprozess ausgelöst werden.

Wie vorstehend schon beschrieben, wird durch die Überwachung des Bandmessers bzw. der Bandsäge gefolgt von einer quantitativen Auswertung, auf verschiedene Weise ermöglicht, die Auslastung und Benutzung der Vorrichtung zu optimieren.

Die vorstehend beschriebene Information wird insbesondere mittels eines Vergleichs von aktuellen Daten zu denen bereits abgelegter und/oder gerissener Bandmesser bzw. Bandsägen generiert. Dabei wird insbesondere ein Maschine-Learning Modells trainiert. Als Trainingsdaten werden insbesondere zuvor erfasste Messwerte von bereits verwendeten Bandmessern bzw. von Bandsägen verwendet und jeweils die dazu korrespondierende erreichte Lebensdauer des Bandmessers bzw. der Bandsäge. Zusätzlich können noch Antriebsdaten, Parameter des Schneide bzw. Sägeprogramms, sowie Materialinformationen des Werkstückes oder des Bandmessers bzw. der Bandsäge als Trainingsdaten verwendet werden. Jeder erneute Lebenszyklus eines Bandmessers bzw. einer Bandsäge wird dann zur Ergänzung des Trainingsdatensatz verwendet. Als Trainingsdatensatz wird der Verlauf des Messwertes bzw. der mehreren Messwerte über die Lebensdauer des Bandmessers bzw. der Bandsäge genutzt und jeweils aktualisiert. Mittels des Algorithmus wird dann anhand aktueller, von dem mindestens einen Sensor ermittelten Messwerte die aktuelle Information generiert. Insbesondere werden die Messwerte kontinuierlich aufgezeichnet und anschließend werden statistische Größen der Messwerte analysiert (z.B. Mittelwert, Median, Schiefe, RMS-Wert) für ein definiertes zurückliegendes Intervall (z.B. 10s) gebildet. Diese statistischen Werte können dann anschließend für das Training des Modells bzw. für die Berechnung der restlichen Lebensdauer verwendet werden. Vorzugsweise werden sämtliche Messwerte zu einem Parameter zusammengefasst und anhand eines Similarity-Modells wird jeweils derjenige Datensatz aus dem Trainingsdaten zur Generierung der Information, und insbesondere zur Prognose der Restlebensdauer verwendetet, welcher dem aktuellen Parameter am ähnlichsten ist.

Insbesondere wird anhand des mindestens einen Messwertes die Restlebensdauer des Bandmessers bzw. der Bandsäge prognostiziert. Durch eine jeweils aktuell erstellte Prognose der Restlebensdauer kann z.B. auf Grundlage von Daten entschieden werden, ob ein neuer Vorgang zum Schneiden oder Sägen eines Werkstückes noch mit dem vorhandenen, eingebauten Bandmesser bzw. Bandsäge gestartet werden soll (dies ist der Fall, wenn die Prozessdauer < Restlebensdauer ist) oder ob das Bandmesser bzw. die Bandsäge vor Starten des Prozesses ausgetauscht werden soll (Prozessdauer > Restlebensdauer). Das Schneide- bzw. Sägeprogramm kann insbesondere basierend auf der verbleibenden Restlebensdauer des Bandmessers bzw. der Bandsäge ausgewählt werden und die Schneid- bzw. Sägeparameter ggf. entsprechend angepasst werden.

Die jeweils aktuell ermittelte Restlebensdauer des Bandmessers bzw. der Bandsäge wird insbesondere an einer Ausgabeeinheit ausgegeben. So kann z.B. auch auf einem Display die konkrete Zeit angegeben werden (z.B. "aktuell prognostizierte Restlebensdauer beträgt noch 5 Stunden") oder mittels einer Signalleuchte signalisiert werden, ob die prognostizierte Restlebensdauer oberhalb oder unterhalb einer definierten Restlebensdauer liegt.

Die Prognose wird insbesondere laufend aktualisiert. Wenn eine erhöhte, unerwartete Schädigung des Bandmessers bzw. der Bandsäge gemessen wird, so kann sich die prognostizierte Lebensdauer auch schneller verringern als ursprünglich angenommen.

Zusätzlich oder ergänzend zur Prognose der Restlebensdauer kann als Information eine Empfehlung hinsichtlich einer Optimierung des Schneide- bzw. Sägeprozesses ausgegeben werden. Insbesondere kann die generierte Information von der Maschinensteuerung der Vorrichtung berücksichtigt werden (belastungsoptimierte Maschinenregelung). Zum Beispiel kann die Umlaufgeschwindigkeit erhöht werden und/oder die Vorschubgeschwindigkeit des Werkstückes reduziert werden. Soll ein neuer Schneide bzw. Sägevorgang gestartet werden, so wird insbesondere automatisch überprüft, ob dieser mit dem bestehenden Bandmesser bzw. der bestehenden Bandsäge zu Ende geführt werden kann. Dabei wird die Dauer des Schneid- bzw. Sägevorgangs mit der prognostizierten Restlebensdauer des Bandmessers bzw. der Bandsäge verglichen. Ist die Restlebensdauer geringer als die Dauer des Schneide- bzw. Sägeprogramms, so wird eine entsprechende Benachrichtigung ausgegeben.

Alternativ oder ergänzend, kann eine Warnung bei zu hoher Schädigung des Bandmessers bzw. der Bandsäge ausgegeben werden, z.B. wenn anhand der aktuellen Messwerte ermittelt, dass die Schädigung des Bandmessers bzw. der Bandsäge aktuell besonders hoch ist und die prognostizierte Lebensdauer schneller als gewöhnlich oder schneller als ein definierter Maximalwert abnimmt.

Eine Warnung muss insbesondere von einer Person quittiert werden, z.B. wenn die Restlebensdauer kleiner ist als die Dauer des Schneide- bzw. Sägeprogramms. Es kann auch vorgesehen sein, dass der Start eines Schneidprogramms nicht erlaubt wird, wenn die prognostizierte Lebensdauer kleiner ist als die für das Schneide- bzw. Sägeprogramm vorgesehene Dauer. Dies stellt sicher, dass die Vorrichtung nur unter optimalen Bedingungen gestartet wird.

Die Erfindung betriff ferner ein Computerprogramm enthaltend maschinenlesbare Anweisungen, die, wenn sie auf einem oder mehreren Computern ausgeführt werden, den oder die Computer dazu veranlassen, ein wie vorstehend beschriebenes Verfahren ausführen. Insbesondere handelt es sich um ein Computerprogramm, welches zusammen mit einer Maschinensteuerung einer Vorrichtung zusammenwirkt. Das Computerprogramm kann insbesondere nachträglich, als Update in die Maschinensteuerungssoftware integriert werden. Als Computer sollen auch Mikrocontroller, Steuerungen (SPS) und/oder FPGA-Schaltkreise aufgefasst werden.

Die Erfindung betrifft auch ein Nachrüstungs-Kit für eine Vorrichtung zum Schneiden oder Sägen von Werkstücken, insbesondere aus Schaumstoff oder Kunststoff, mit einem endlosen umlaufenden Bandmesser bzw. einer endlosen umlaufenden Bandsäge. Das Nachrüstungs-Kit umfasst mindestens einen Sensor zur Anordnung an der Vorrichtung, wobei der mindestens eine Sensor zur Messung eines die Bandbelastung repräsentierenden Messwertes ausgelegt ist.

Die verschiedenen Sensoren sind vorstehend in Zusammenhang mit der Vorrichtung beschrieben. Der mindestens eine Sensor weist jeweils Mittel auf, um diesen an der Anlage zu montieren.

Insbesondere umfasst das Nachrüstungs-Kit auch ein Computerprogramm gemäß der vorstehenden Beschreibung, wobei die Messwerte der Sensoren mittels des Computerprogramms analysiert werden können und entsprechend eine Prognose der Restlebensdauer erstellt wird.

Weiter praktische Ausführungsformen und Vorteile sind in Verbindung mit den Figuren beschrieben. Es zeigen:
- Fig. 1: eine horizontale Konturen-Schneidemaschine in einer schematischen Darstellung in einer Ansicht von vorne,
- Fig. 2: den mit II gekennzeichneten Bereich aus Fig. 1 in einer vergrößerten Ansicht
- Fig. 3: den mit III gekennzeichneten Bereich aus Fig. 1 in einer vergrößerten Ansicht,
- Fig. 4: den mit IV gekennzeichneten Bereich aus Fig. 1 in einer vergrößerten Ansicht,
- Fig. 5: ein Ablaufdiagramm eines Verfahrens gemäß einer ersten Ausführungsform.

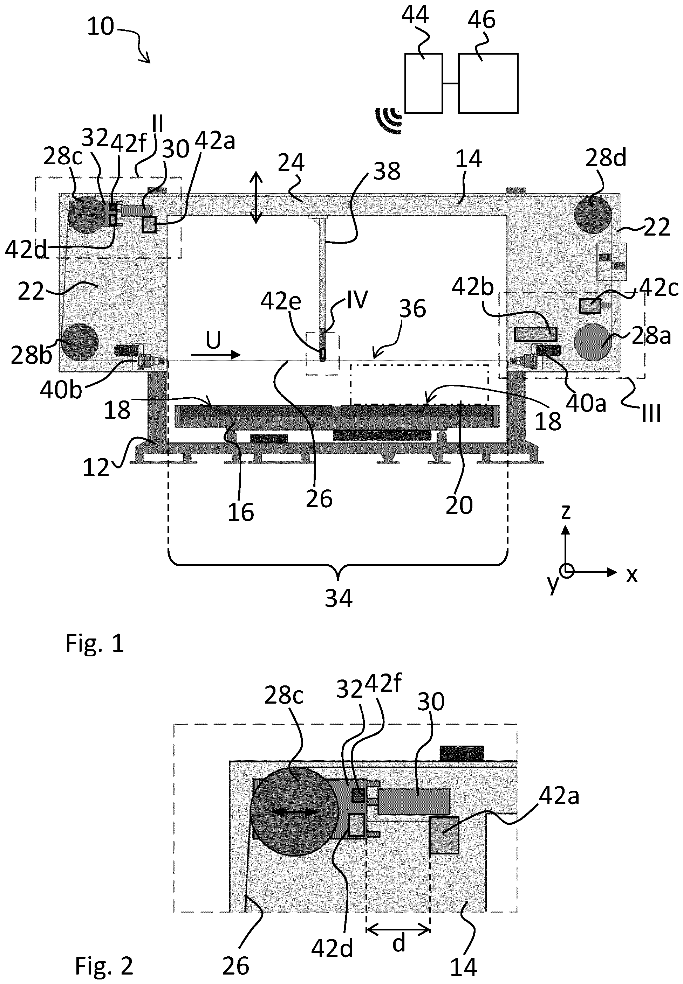

In Fig. 1 ist eine Vorrichtung zum Messerschneiden oder Sägen und hier speziell eine horizontale Konturen-Schneidemaschine 10 in einer schematischen Darstellung gezeigt.

Die Schneidemaschine 10 weist einen Maschinenständer 12 und einen daran angeordneten Rahmen 14 auf. Der Maschinenständer 12 dient zum Aufstellen der Schneidemaschine 10 auf dem Boden und zur Aufnahme eines in y-Richtung verfahrbaren Tisches 16. Der Tisch 16 weist vorliegend zwei Auflageflächen 18 für jeweils ein Werkstück 20 auf. Auf einer Auflagefläche 18 des Tisches 16 ist vorliegend ein Werkstück 20 angeordnet (hier nur schematisch dargestellt).

Der Rahmen 14 ist vorliegend durch zwei Seitenteile 22 und ein oberes Rahmenteil 24 gebildet. Der Rahmen 14 bildet ein Gehäuse für ein endloses, umlaufendes Bandmesser 26. Das Bandmesser 26 ist vorliegend über vier Umlenkrollen 28a, 28b, 28c, 28d zu einer rechteckförmigen Ebene (x-z-Ebene) aufgespannt, wobei sich die Umlenkrollen 28a, 28b, 28c, 28d jeweils in den Ecken der rechteckförmigen Ebene befinden. Das Bandmesser 26 umläuft in Umlaufrichtung (hier entlang des Pfeils U) um die vier Umlenkrollen 28a, 28b, 28c, 28d. Die Umlenkrollen 28a, 28b, 28c, 28d dienen zur Führung des Bandmessers 26.

Die vier Umlenkrollen 28a, 28b, 28c, 28d sind innerhalb des Rahmens 14 angeordnet und ein Großteil des umlaufendes Bandmessers 26 auch. Eine Spannrolle 28a ist die Antriebsrolle, die zum Antrieb des Bandmessers 26 in Umlaufrichtung U dient.

Um eine ausreichende Bandspannung des Bandmessers 26 zu gewährleisten, ist die Umlenkrolle 28c eine Spannrolle, welche mit einem Pneumatikzylinder 30 verbunden ist. Die Spannrolle 28c ist zusammen mit einem Spannschlitten 32 verschiebbar in Querrichtung (x-Richtung) am Rahmen 14 gelagert.

Zwischen der ersten Umlenkrolle 28a und der zweiten Umlenkrolle 28b ist ein Schneidbereich 34 ausgebildet. In dem Schneidbereich 34 befindet sich ein Schneidabschnitt 36 des Bandmessers 26, welcher außerhalb des Rahmens 14 verläuft und in welchem sich das Bandmesser 26 in Querrichtung (x-Richtung) der Schneidemaschine 10 erstreckt. In dem Schneidbereich 34 wird das Werkstück 20 zugeführt und hier von dem Bandmesser 26 geschnitten. Mittig des Schneidbereiches 34 ist ein Mittenhalter 38 angeordnet, welcher sich von dem oberen Rahmenelement 24 des Rahmens 14 senkrecht (in z-Richtung) nach unten erstreckt. Der Mittenhalter 38 dient der Führung und Stabilisierung des Schneidabschnitts 36 des Bandmessers 26 im Schneidbereich 34.

Es handelt sich bei der vorliegenden Schneidemaschine 10 um eine Horizontalschneidmaschine, wobei der Rahmen 14 samt Bandmesser 26 in vertikaler Richtung (z-Richtung) verfahrbar ist und in das Werkstück 20 2D-Konturen in der y-z-Ebene geschnitten werden.

Um auch schräge Konturen schneiden zu können, ist das Bandmesser 26 in dem Schneidabschnitt 36 verdrehbar. Dazu ist das Bandmesser 26 über Verdreheinheiten 40a, 40b verdrehbar. Die Verdreheinheiten 40a, 40b sind jeweils seitlich des Schneidbereiches 34 angeordnet und verdrehen das Bandmesser 26 um die Längsachse. Zusätzlich kann eine Verdreheinheit am Mittenhalter 38 angeordnet sein (nicht gezeigt). Die Verdreheinheiten 40a, 40b sind jeweils synchronisiert und verdrehen das Bandmesser 26 gleichzeitig um denselben Verdrehwinkel. Die Torsion des Bandmessers 26 erfolgt zwischen den seitlichen Verdreheinheiten 40a, 40b und den dazu benachbarten Umlenkrollen 28a, 28b. Zwischen den Verdreheinheiten 40a, 40b im Schneidbereich 26 verläuft das Bandmesser 26 unverdreht bzw. nicht tordiert.

Zur Überprüfung des Zustands des Bandmessers 26 weist die Schneidemaschine 10 gemäß dem vorliegenden Ausführungsbeispiel mehrere Sensoren 42a, 42b, 42c, 42d, 42e, 42f auf, welche jeweils die Bandschädigung des Bandmessers 26 repräsentierende Messwerte erfassen.

Ein erster Sensor 42a ist hier ein Distanzsensor zur Messung des Verlagerung der Spannrolle 28c. Dies ist im Detail in Fig. 2 gezeigt. Die Spannrolle 28c selbst ist hier in x-Richtung mittels des Pneumatikzylinders 30 verlagerbar. Dadurch wird jeweils eine definierte Spannkraft auf das umlaufende Bandmesser 26 ausgeübt. Je weiter die Spannrolle 28c nach außen ausgelenkt ist - also in Fig. 2 in x-richtung nach links - umso stärker hat sich das Bandmesser 26 bereits gelängt. Die Verschiebung der Spannrolle 28c wird mittels des ortsfest am Rahmen 14 angeordneten Distanzsensor 42a gemessen. Konkret wird der Abstand d zwischen dem mit der Spannrolle 28c verlagerbaren Spannschlitten 32 und dem Distanzsensor 42a gemessen.

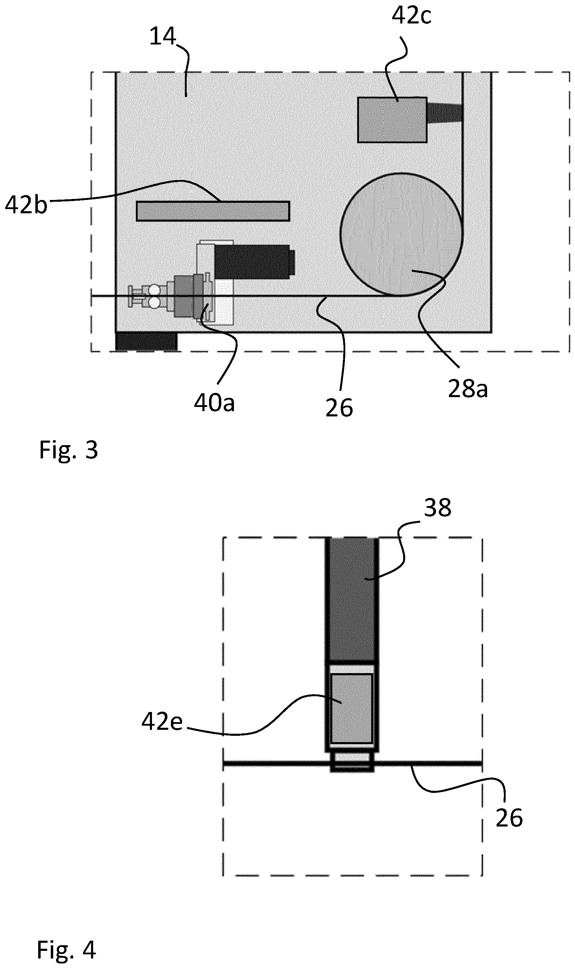

Ein zweiter Sensor 42b ist ein Temperatursensor zur Messung der Umgebungstemperatur in der Nähe des Bandmessers 26 (vgl. Fig. 3). Mittels des Temperatursensors 42b wird mittelbar die Temperatur des Bandmessers 26 bestimmt. In der gezeigten Ausführungsform ist der Temperatursensor 42b in der Umgebung der Antriebsrolle 28a angeordnet.

Ein dritter Sensor 42c ist ebenfalls ein Temperatursensor, welcher direkt die Temperatur des Bandmessers 26 misst (vgl. Fig. 3). Es handelt sich um ein Laserpyrometer, wobei ein Laserstrahl auf das Bandmesser 26 gerichtet ist. In der gezeigten Ausführungsform ist der dritte Sensor 42c unmittelbar benachbart der Antriebsrolle 28a angeordnet.

Ein vierter Sensor 42d und ein fünfter Sensor 42e sind Beschleunigungssensoren. Der vierte Sensor 42d ist ein Beschleunigungssensor, welcher an dem zusammen mit der Spanrolle 28c verschieblichen Spannschlitten 32 der Spannrolle 28c angeordnet ist (vgl. Fig. 2). Das Bandmesser 26 steht in engem Kontakt mit der Spannrolle 28c und überträgt Vibrationen an die Spannrolle 28c und dessen Spannschlitten 32. Diese Vibrationen werden von dem Beschleunigungssensor 42d erfasst. Der Beschleunigungssensor 42d misst die Beschleunigung des Spannschlittens 32 in alle drei Raumrichtungen.

Der fünfte Sensor 42e ist an der Mittenhalterung 38 angeordnet und misst die durch das Bandmesser 26 an die Mittenhalterung 38 übertragenen Vibrationen bzw. Beschleunigungen. Der Beschleunigungssensor 42e misst ebenfalls die Beschleunigung in alle drei Raumrichtungen.

Ein sechster Sensor ist ein Kraftsensor 42f, der direkt oder indirekt die wirkende Kraft zwischen dem Pneumatikzylinder 30 und des Spannschlittens 32 der Spannrolle 28c in Richtung des Pneumatikzylinders 30 misst. Dieser kann neben der aktuell wirkenden Spannkraft auch sich zeitlich schnell ändernde kleine Änderungen der Kraft aufgrund übertragener Vibrationen erfassen.

Die von den jeweiligen Sensoren 42a, 42b, 42c, 42d, 42e, 42f ermittelten, die Bandschädigung repräsentierenden Messwerte werden zu einer Auswerteeinheit 44 weitergeleitet. Die Kommunikation zwischen den Sensoren 42a, 42b, 42c, 42d, 42e, 42f und der Auswerteeinheit 44 erfolgt in der gezeigten Ausführungsform drahtlos. Die von der Auswerteeinheit 44 generierten Informationen, wie beispielsweise eine prognostizierte Restlebensdauer des Bandmessers 26 werden dann an einer Ausgabeeinheit 46 angezeigt.

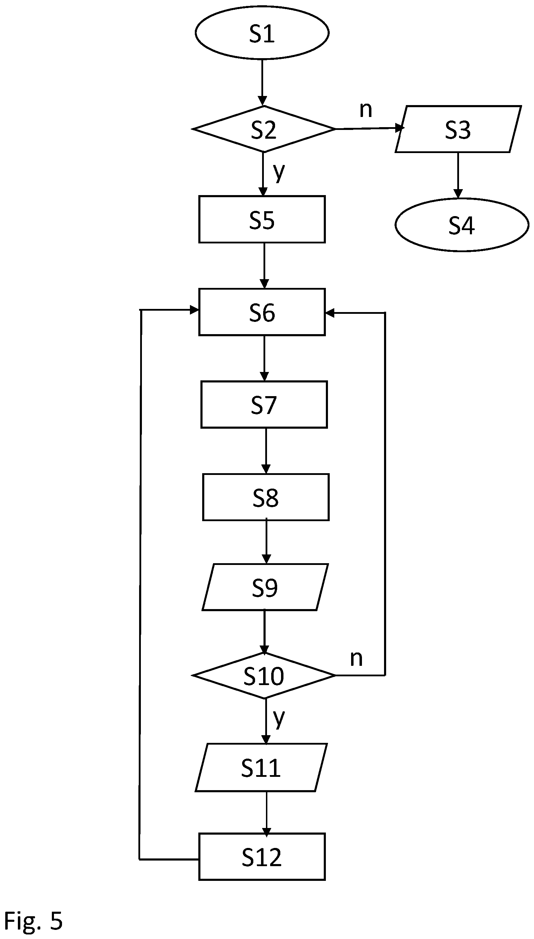

In Fig. 5 ist ferner ein Verfahren zur Überprüfung des Schädigungszustandes eines Bandmessers 26 dargestellt.

Mit Schritt S1 wird das Verfahren gestartet.

Nach dem Start des Verfahrens in Schritt S1 wird in Schritt S2 überprüft, ob die Restlebensdauer des Bandmessers 26 größer ist als die Dauer des gestarteten Schneideprogramms.

Wird in Schritt S2 festgestellt, dass die ermittelte Restlebensdauer des Bandmessers 26 kleiner ist als die Dauer des zu startenden Schneidprogramms (n), so wird das Schneidprogramm zunächst nicht gestartet und in Schritt S3 eine Warnung ausgeben. In Schritt S4 endet dann das Verfahren. Statt das Verfahren enden zu lassen, kann auch vorgesehen sein, dass die Schneidparameter automatisch oder manuell angepasst werden, so dass Bandmesser 26 geschont wird und das Schneideprogramm doch noch ausgeführt werden kann bzw. ein Bediener auf "Ignorieren" klickt.

Wird in Schritt S2 festgestellt, dass die ermittelte Restlebensdauer des Bandmessers 26 größer als die Dauer des Schneideprogramms ist (y=yes), so wird das Schneidprogramm in Schritt S5 gestartet.

Während der Dauer des Schneidprogramms wird in Schritt S6 von mindestens einem Sensor 42a, 42b, 42c, 42d, 42e, 42f ein die Bandschädigung des Bandmessers 26 repräsentierender Messwert erfasst und in Schritt S7 an die Auswerteeinheit 44 weitergeleitet.

Die Auswerteeinheit 44 generiert in Schritt S8 aus dem Messwert bzw. den mehreren Messwerten eine Information bezüglich des Schädigungszustand des Bandmessers 26. Die Information wird auf Basis der zugeführten Messwerte mit einem trainierten Machine-Learning-Algorithmus generiert. Hier handelt es sich bei der Information um eine Restlebensdauer des Bandmessers 26.

In Schritt S9 wird die Restlebensdauer an die Ausgabeeinheit 46 übermittelt und auf der Ausgabeeinheit 46 ausgegeben.

Nach Schritt S9 wird in Schritt S10 zusätzlich überprüft, ob die aktuelle Belastung des Bandmessers 26 besonders stark ist, wenn ja (y), dann wird in Schritt S11 eine Warnung ausgegeben und zusätzlich werden in Schritt S12 die Parameter des Schneidvorgangs angepasst. Anschließend wird das Verfahren mit Schritt S6 fortgesetzt.

Wenn in Schritt S10 festgestellt wird, dass die Belastung des Bandmesser 26 nicht größer als vorgesehen ist (n), dann wird das Verfahren mit Schritt S6 fortgesetzt.

### Bezugszeichenliste

- 10: Vorrichtung zum Messerschneiden oder Sägen (Schneidmaschine)
- 12: Maschinenständer
- 14: Rahmen
- 16: Tisch
- 18: Auflagefläche
- 20: Werkstück
- 22: Seitenteil
- 24: oberes Rahmenteil
- 26: Bandmesser
- 28a: Umlenkrolle, Antriebsrolle
- 28b: Umlenkrolle
- 28c: Umlenkrolle, Spannrolle
- 28d: Umlenkrolle
- 30: Pneumatikzylinder
- 32: Spannschlitten)
- 34: Schneidbereich
- 36: Schneidabschnitt
- 38: Mittenhalterung
- 40a: erste Verdreheinheit
- 40b: zweite Verdreheinheit
- 42a: Sensor, Distanzsensor
- 42b: Sensor, Temperatursensor
- 42c: Sensor, Temperatursensor
- 42d: Sensor, Beschleunigungssensor
- 42e: Sensor, Beschleunigungssensor
- 42f: Sensor, Kraftsensor
- 44: Auswerteeinheit
- 46: Ausgabeeinheit

- U: Umlaufrichtung
- d: Abstand Halterung Spannrolle zu Distanzsensor

## Patentansprüche

1. Vorrichtung zum Messerschneiden oder Sägen von Werkstücken, mit einem endlosen, umlaufenden Bandmesser (26) bzw. einer endlosen umlaufenden Bandsäge, wobei die Vorrichtung (10) mindestens einen Sensor (42a, 42b, 42c, 42d, 42e, 42f) aufweist, wobei der mindestens eine Sensor (42a, 42b, 42c, 42d, 42e, 42f) einen die Bandschädigung repräsentierenden Messwert erfasst und wobei der Sensor (42a, 42b, 42c, 42d, 42e, 42f) mit mindestens einer Auswerteeinheit (44) verbunden ist und der Auswerteinheit (44) der die Bandschädigung repräsentierende Messwert zugeführt wird und wobei mittels der Auswerteeinheit (44) basierend auf dem Messwert eine Information über den Schädigungszustand des Bandmessers (26) oder der Bandsäge generierbar ist, insbesondere eine Lebensdauer des Bandmessers (26) oder der Bandsäge prognostizierbar ist.

2. Vorrichtung nach dem vorstehenden Anspruch,
**dadurch gekennzeichnet, dass**
der mindestens eine Sensor (42a) direkt oder indirekt einen Verfahrweg einer Spannrolle (28c) misst, wobei mittels der Spannrolle (28c) das Bandmesser (26) bzw. die Bandsäge auf eine definierte Bandspannung gespannt wird.

3. Vorrichtung nach dem vorstehenden Anspruch,
**dadurch gekennzeichnet, dass**
der mindestens eine Sensor (42f) direkt oder indirekt eine wirkende Kraft einer Spannrolle (28c) misst, wobei mittels der Spannrolle (28c) das Bandmesser (26) bzw. die Bandsäge auf eine definierte Bandspannung gespannt wird.

4. Vorrichtung nach einem der vorstehenden Ansprüche,
**dadurch gekennzeichnet, dass**
der mindestens eine Sensor ein Temperatursensor (42b, 42c) ist, zur mittelbaren oder unmittelbaren Erfassung der Temperatur des Bandmessers (26) bzw. der Bandsäge.

5. Vorrichtung nach einem der vorstehenden Ansprüche,
**dadurch gekennzeichnet, dass**
es sich bei dem mindestens einen Sensor um einen Beschleunigungssensor (42d, 42e) handelt, zur Messung von durch das Bandmesser (26) bzw. der Bandsäge verursachten Vibrationen.

6. Verfahren zur Überwachung des Schädigungszustandes eines endlosen, umlaufenden Bandmessers (26) bzw. einer endlosen umlaufenden Bandsäge, wobei mindestens ein die Bandschädigung repräsentierender Messwert erfasst wird und anhand des mindestens einen Messwertes eine Information über den Schädigungszustand des Bandmessers (26) bzw. der Bandsäge generiert wird.

7. Verfahren nach dem vorstehenden Anspruch,
**dadurch gekennzeichnet, dass**
die Information unter anderem mittels eines Machine-Learning-Algorithmus generiert wird.

8. Verfahren nach einem der beiden vorstehenden Ansprüche,
**dadurch gekennzeichnet, dass**
als Information eine Restlebensdauer des Bandmessers (26) oder der Bandsäge generiert wird.

9. Verfahren nach einem der vorstehenden Ansprüche,
**dadurch gekennzeichnet, dass**
als Information eine Empfehlung hinsichtlich einer Optimierung des Schneide- bzw. Sägeprozesses ausgegeben wird.

10. Computerprogramm, enthaltend maschinenlesbare Anweisungen, die, wenn sie auf einem oder mehreren Computern ausgeführt werden, den oder die Computer dazu veranlassen, ein Verfahren nach einem der Ansprüche 6 bis 9 auszuführen.

11. Nachrüstungs-Kit für eine Vorrichtung zum Schneiden oder Sägen von Werkstücken (10) mit einem endlosen, umlaufenden Bandmesser (26) bzw. einer endlosen, umlaufenden Bandsäge, wobei das Nachrüstungs-Kit mindestens einen Sensor (42a, 42b, 42c, 42d, 42e, 42f) zur Anordnung an der Vorrichtung (10) umfasst, wobei der mindestens eine Sensor (42a, 42b, 42c, 42d, 42e, 42f) zur Messung eines die Bandschädigung repräsentierenden Messwertes ausgelegt ist und wobei das Nachrüstungs-Kit ferner ein Computerprogramm gemäß Anspruch 10 zur Ausführung auf einer Auswerteeinheit (44) umfasst.
